# EUROPEAN PATENT SPECIFICATION

(11) **EP 0 993 255 B1**
(45) Date of publication and mention of the grant of the patent: **30.01.2002**
(21) Application number: 98930959.6
(22) Date of filing: 29.06.1998
(51) Int. Cl.: A41D 31/02, A41D 31/00, B32B 25/10

(54) **MATERIAL PRIMARILY FOR MARINE GARMENTS**
STOFF ZUR VORWIEGENDEN VERWENDUNG IN SEEWASSERFESTEN KLEIDUNGSSTÜCKEN
MATERIAU DESTINE ESSENTIELLEMENT A LA CONFECTION DE VETEMENTS A L'USAGE DES MARINS

(30) Priority: 01.07.1997 GB 9713949; 14.05.1998 GB 9810397
(43) Date of publication of application: 19.04.2000
(73) Proprietor: Ryan, Abdon, Westport, Co. Mayo (IE)
(72) Inventor: Ryan, Abdon, Westport, Co. Mayo (IE)
(74) Representative: King, James Bertram
(86) International application number: GB9801894
(87) International publication number: WO9901046

(56) References cited:
- DE-A- 4 232 947
- FR-A- 2 131 852
- GB-A- 2 021 040
- GB-A- 2 048 164
- US-A- 4 502 153
- US-A- 4 515 851
- US-A- 4 610 923

## Description

This invention relates to a material which is primarily intended for use in the manufacture of garments used in marine environments and more particularly for sub-aqua use.

Clothing worn for water sports and diving may comprise dry-suits, wet-suits, gloves and headgear and the materials used should provide water impermeability and protection as well as allowing freedom of movement. These requirements can be somewhat contradictory in practice.

An object of this invention is to provide a material suitable for the above mentioned purposes and which provides protection, impermeability and light weight with good freedom of movement.

According to this invention there is provided a material suitable for use in the manufacture of clothing primarily intended for marine use, said material comprising a waterproof layer of a polychloroprene rubber bonded or laminated to an abrasion resistant layer having a base of an aromatic polyamide fibre, said layer incorporating an elastane fibre.

When made up into garments with the aromatic polyamide fibre layer being external the material according to this invention provides enhanced protection and warmth for the hands and bodies of wearers engaged in water sports of various kinds and in addition durability is much improved.

According to this invention there is also provided a garment such as a dry-suit for marine use and fabricated at least in part from the material of this invention

Known materials comprising bonded laminates of polychloroprene, also known as neoprene and polyester or nylon have a very short life and in some environments this is measured in days.

A feature of this invention is the bonded lamination of the polychloroprene and aromatic polyamide fibre based layer forming the material from which the relevant article of clothing is made in contrast to a mere mechanical connection forming a reinforced area of a garment.

The bonded lamination may be effected during the production of the polychloroprene layer and is thus fully integrated therewith.

In an embodiment only a portion of a garment may be formed from the laminate but in most cases this will be a major part of the product being the most vulnerable areas.

In a preferred construction the polychloroprene rubber layer forms the base of the material and the aromatic polyamide fibre based outer layer is bonded with this and with a further polyester or nylon fabric layer bonded to form an inner layer.

One embodiment according to this invention is shown by way of an example only in the drawings illustrating schematically a section through a portion of the material.

Referring to the drawings:

### Layer 1.

Forms an internal lining layer of the material and may be a polyester or nylon fabric having a 0.5 mm thickness. Both sides of the polychloroprene layer may be provided with this layer if necessary.

### Layer 2.

Forms the middle layer of polychloroprene and may be 0.5 to 10 mm, more specifically 2 to 8 mm thick. This material may be that which is customarily used for water-wear.

### Layer 3

Forms the external layer and may be about 1 mm thick. This material comprises an aromatic polyamide fibre, such as KEVLAR (a Registered Trade Mark) or is based thereon. A typical material used for this layer is manufactured by Schoeller Textil AG, of Sevelen, Switzerland under the code 13316. This material comprises:
5.0% Elastane fibre such as LYCRA, a Registered Trade Mark
25.0% Polyamide fibre KEVLAR,
70.0% Polyamide Nylon

The composition of this material may vary. The feature of this invention is the use of the aromatic polyamide fibre component in the material.

The aromatic polyamide fibre based layer 3 and possibly also the internal layer 1 may be bonded to the polychloroprene by means of an adhesive of suitable compatibility. As an alternative method of lamination the aromatic polyamide fibre based layer 3 may be applied in a molten or semi-molten state and rolled under pressure to bond with the polychloroprene. In a further method the layers may be connected by means of threads of polyamide fibre material being polyamide fibre filaments twisted together.

The laminated material disclosed proved to be effective for the manufacture of gloves and a diver's dry-suit. For the latter all outward facing external surfaces of the suit were manufactured from the laminate material.

To achieve the bonding of the component layers to form the laminate adhesive may be applied to one or both mating surfaces of the layers and the layers brought together and subject to heat and pressure in a press. The adhesive used and the cure times will be selected according the properties of the adhesive used.

For certain parts of a dry-suit, for example, the internal layer 1 may be omitted. This is particularly required for the cuff areas connecting with gloves for example where the internal surface adjacent the skin of a wearer has to be smooth polychloroprene which provides a good water seal. Thus this invention also contemplates a material comprising layers 2 and 3 only as least for some components of a garment.

The material of this invention may be used for making up into wet-suits and dry-suits for water sports, sub-aqua activities and caving; motor-cycle clothing and panniers; roofs for vehicles; booties and gloves for water-sports; fishermen's waders; rucksacks and holdalls and generally for articles which are to be water impervious and durable and in particular abrasive resistant.
The laminate comprising the aromatic polyamide fibre based layer and the polychloroprene layer may be bonded by applying an even coat of adhesive to both mating surfaces or to one surface only and after drying for a short period the layers are brought together and subject to heat and pressure. A nitrile based adhesive such as EVOSTIK 5007/2 (a Registered Trade Mark) may be used which requires a drying period but little or no pressure or heat to achieve a bond. An adhesive such as ScotchGrip (a Registered Trade Mark) requires no drying time but does require heat and pressure to achieve a cure and bond. Both these methods have proved satisfactory in practice.

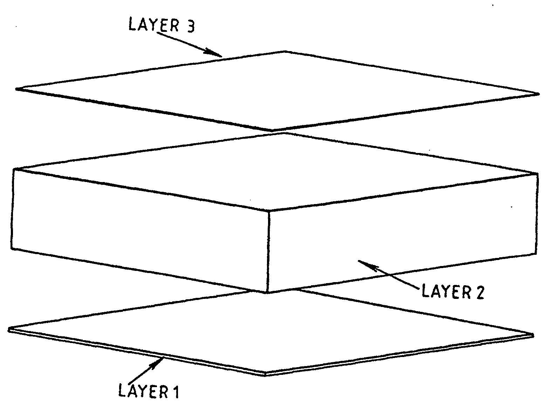

## Claims

1. A material suitable for use in the manufacture of clothing primarily intended for marine use, said material comprising a waterproof layer of a polychloroprene rubber bonded or laminated to an abrasion resistant layer having a base of an aromatic polyamide fibre, said layer incorporating an elastane fibre.

2. A material according to Claim 1, wherein the abrasion resistant layer comprises 25% aromatic polyamide fibre, 5% elastane fibre and 70% polyamide nylon.

3. A material according to any preceding Claim, wherein the waterproof polychloroprene layer forms a base layer with the abrasion resistant layer bonded to one side thereof and a further layer of a polyester or nylon fabric bonded to the other side thereof.

4. A material according to any preceding Claim, wherein a layer of a polyester or nylon fabric material is bonded to the waterproof layer and to which the abrasion resistant layer is thereafter bonded.

5. A material in accordance with any preceding claim wherein, the layers are bonded using an adhesive material comprising a contact adhesive applied to one or both relevant mating surfaces or a curable adhesive applied to one or both relevant mating surfaces after which the laminate is subject to heat and pressure to cure the adhesive.

6. A garment such as a dry-suit for marine use and fabricated at least in part from the material according to any preceding Claim.

7. A garment according to Claim 6, wherein the abrasion resistant layer is external and an internal fabric layer is bonded to the waterproof layer.

8. A garment according to Claim 7, wherein the internal layer is omitted from areas where a waterproof seal is required the waterproof layer being exposed in said areas.

9. A material or a garment according to any preceding Claim, wherein the waterproof layer of polychloroprene is between 0.5 and 10 mm in thickness; the aromatic polyamide fibre abrasion resistant layer is 1 mm in thickness and, when present, the internal layer of polyester or nylon fabric is 0.5 mm in thickness.

10. A material or garment according to Claim 9, wherein the polychloroprene layer is between 2 and 8 mm thick.

## Patentansprüche

1. Material, das zur Verwendung bei der Herstellung von Bekleidung geeignet ist, die in erster Linie für den Unterwassereinsatz vorgesehen ist, wobei das genannte Material eine wasserfeste Schicht aus einem Polychloroprenkautschuk umfasst, die an eine abriebbeständige Schicht mit einer Basis aus einer aromatischen Polyamidfaser gebunden oder laminiert ist, wobei die genannte Schicht eine Elastanfaser beinhaltet.

2. Material nach Anspruch 1, wobei die abriebbeständige Schicht 25% aromatische Polyamidfaser, 5% Elastanfaser und 70% Polyamidnylon umfasst.

3. Material nach einem der vorherigen Ansprüche, wobei die wasserfeste Polychloroprenschicht eine Basisschicht bildet, wobei die abriebbeständige Schicht an eine Seite davon gebunden ist und eine weitere Schicht aus einem Polyester- oder Nylongewebe an die andere Seite davon gebunden ist.

4. Material nach einem der vorherigen Ansprüche, wobei eine Schicht aus einem Polyester- oder Nylongewebematerial an die wasserfeste Lage gebunden wird, an die danach die abriebbeständige Schicht gebunden wird.

5. Material nach einem der vorherigen Ansprüche, wobei die Schichten mit einem Klebstoffmaterial aneinander gebunden werden, umfassend einen Kontaktklebstoff, der auf eine oder beide relevante(n) Verbindungsflächen aufgebracht wird, oder einen härtbaren Klebstoff, der auf eine oder beide relevante(n) Verbindungsflächen aufgebracht wird, wonach das Laminat zum Härten des Klebstoffs Wärme und Druck ausgesetzt wird.

6. Kleidungsstück wie zum Beispiel ein Trockenanzug für den Unterwassereinsatz, das wenigstens zum Teil aus dem Material nach einem der vorherigen Ansprüche hergestellt ist.

7. Kleidungsstück nach Anspruch 6, wobei die abriebbeständige Schicht außen liegt und eine innere Gewebeschicht an die wasserfeste Schicht gebunden ist.

8. Kleidungsstück nach Anspruch 7, wobei die innere Schicht in Bereichen weggelassen wird, in denen eine wasserfeste Versiegelung benötigt wird, wobei die wasserfeste Schicht in den genannten Bereichen frei liegt.

9. Material oder Kleidungsstück nach einem der vorherigen Ansprüche, wobei die wasserfeste Schicht aus Polychloropren eine Dicke zwischen 0,5 und 10 mm hat; die abriebbeständige Schicht aus aromatischer Polyamidfaser eine Dicke von 1 mm hat und, wenn anwesend, die innere Schicht aus Polyester- oder Nylongewebe eine Dicke von 0,5 mm hat.

10. Material oder Kleidungsstück nach Anspruch 9, wobei die Polychloroprenlage eine Dicke zwischen 2 und 8 mm hat.

## Revendications

1. Matériau convenable pour une utilisation dans la fabrication de vêtements destinés essentiellement à un usage marin, ledit matériau comprenant une couche imperméable en un caoutchouc en polychloroprène collée ou laminée à une couche résistant à l'abrasion ayant une base faite en une fibre de polyamide aromatique, ladite couche comprenant une fibre d'élastane.

2. Matériau selon la revendication 1, dans lequel la couche résistant à l'abrasion comprend 25% de fibre de polyamide aromatique, 5% de fibre d'élastane et 70% de nylon polyamide.

3. Matériau selon l'une quelconque des revendications précédentes, dans lequel la couche de polychloroprène imperméable forme une couche de base avec la couche résistante à l'abrasion collée sur l'un des côtés de celle-ci et une couche supplémentaire d'un polyester ou d'un tissu de nylon collée sur l'autre côté de celle-ci.

4. Matériau selon l'une quelconque des revendications précédentes, dans lequel une couche d'un matériau en polyester ou en tissu de nylon est collée à la couche imperméable et à laquelle la couche résistante à l'abrasion est ensuite collée.

5. Matériau selon l'une quelconque des revendications précédentes, dans lequel les couches sont collées en utilisant un matériau adhésif comprenant un adhésif de contact appliqué à l'une ou aux deux surfaces d'appariement concernées ou un adhésif durcissable appliqué à l'une ou aux deux surfaces d'appariement concernées, après quoi le laminé est soumis à la chaleur et à la pression pour durcir l'adhésif.

6. Vêtement tel qu'une tenue imperméable pour un usage marin et fabriqué au moins en partie à partir du matériau selon l'une quelconque des revendications précédentes.

7. Vêtement selon la revendication 6, dans lequel la couche résistante à l'abrasion est externe et une couche de tissu interne est collée à la couche imperméable.

8. Vêtement selon la revendication 7, dans lequel la couche interne est omise des zones où un joint imperméable est nécessaire, la couche imperméable étant exposée dans lesdites zones.

9. Matériau ou vêtement selon l'une quelconque des revendications précédentes, dans lequel la couche de polychloroprène imperméable a une épaisseur comprise entre 0,5 et 10 mm ; la couche résistante à l'abrasion en fibre de polyamide aromatique a une épaisseur de 1 mm, et, lorsqu'elle est présente, la couche interne en polyester ou en tissu de nylon a une épaisseur de 0,5 mm.

10. Matériau ou vêtement selon la revendication 9, dans lequel la couche de polychloroprène a une épaisseur comprise entre 2 et 8 mm.
